(19) Europäisches Patentamt / European Patent Office / Office européen des brevets

(11) **EP 4 127 465 B1**

(12) **EUROPEAN PATENT SPECIFICATION**

(45) Date of publication and mention of the grant of the patent:
**07.02.2024   Bulletin 2024/06**

(21) Application number: **20737569.2**

(22) Date of filing: **30.06.2020**

(51) International Patent Classification (IPC):
**F03D 17/00** *(2016.01)*

(52) Cooperative Patent Classification (CPC):
**F03D 17/00;** F05B 2270/303; Y02E 10/72

(86) International application number:
**PCT/IB2020/056187**

(87) International publication number:
**WO 2022/003397 (06.01.2022 Gazette 2022/01)**

(54) **METHOD FOR PREDICTIVE MONITORING OF THE CONDITION OF WIND TURBINES**

VERFAHREN ZUR PRÄDIKTIVEN ZUSTANDSÜBERWACHUNG VON WINDENERGIEANLAGEN

PROCÉDÉ DE SURVEILLANCE PRÉDICTIVE DE L'ÉTAT D'ÉOLIENNES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.02.2023   Bulletin 2023/06**

(73) Proprietor: **Fluence Energy, LLC Arlington, VA 22203 (US)**

(72) Inventors:
• **PIZZA, Gianmarco**
  **8008 Zürich (CH)**
• **JARLSKOG, Eskil**
  **8008 Zürich (CH)**

(74) Representative: **P&TS SA (AG, Ltd.)**
  **Avenue J.-J. Rousseau 4**
  **P.O. Box 2848**
  **2001 Neuchâtel (CH)**

(56) References cited:
| | |
|---|---|
| CN-A- 109 779 846 | US-A1- 2010 179 773 |
| US-A1- 2010 268 395 | US-A1- 2010 332 272 |
| US-A1- 2012 025 529 | US-A1- 2019 203 699 |

**Description**

Field of the invention

The present invention relates to a method for predictive monitoring of the condition of power generating plants, and in particular, it relates to the condition monitoring of wind turbines.

Background

Power plants of different types have in common the requirements for the maintenance of various critical parts such as turbines, pumps, gearboxes, generators, etc. The requirements for such kind of services and maintenance are demanding with the need for high reliability with low downtime. Traditionally, the preventive type of maintenance is applied where the service and control are performed periodically regardless of the state of the power generating device or the specific component. This approach has the advantage of simplicity and ease of implementation. However, there are various disadvantages related to the preventive maintenance approach such as the unnecessary servicing of certain parts and the inability of the prediction of the need for servicing other parts more frequently. These disadvantages could drive the total cost of the maintenance, and in some cases, they can lead to failures of the components and costly downtime.

In recent decades, wind power has become increasingly popular as a way of power generation, and it is already replacing a significant part of the traditional power plants such as coal plants and gas plants. At the same time, the maintenance of wind turbines is becoming a critical issue.

It is an aim of the present invention to mitigate at least some of the disadvantages of the condition monitoring and maintenance currently applied for power generation plants and in particular wind farms. CN109779846 A describes an example of a known monitoring method.

Summary

According to the present invention, there is provided a method for predictive monitoring of the condition of wind turbines, the method comprising the steps of:

- selecting at least one wind turbine inside a wind farm and at least one component of the wind turbine;
- acquiring supervisory control and data acquisition (SCADA) data comprising operational data of the wind farm during a preselected time period, wherein the SCADA data comprises temperature values of the at least one component of the wind turbine during the preselected time period;
- processing SCADA data comprising calculating differential data, wherein the differential data is a difference between the temperature values of the selected turbine component of the selected wind turbine and an average temperature of the selected wind turbine component in at least two wind turbines in the wind farm;
- defining a monitoring time period to monitor the component, wherein the monitoring time interval is shorter than the preselected time period;
- extracting features, wherein the extraction of the features comprises calculating at least one predetermined statistic of the differential data during the monitoring time period, and saving the predetermined statistics as a monitoring feature; and
- testing if at least one monitoring feature exceeds a threshold value.

The method is characterized in that the step of the extracting the features further comprises calculating at least one predetermined statistic of the differential data during a reference time period, and that the reference time period is at least partially overlapping the monitoring time period and saving the predetermined statistic as a reference feature. The threshold value is a function of at least one reference feature.

In an embodiment the method comprises the step of sending an alarm in the case that at least one monitoring feature exceeds the corresponding threshold value.

In an embodiment of the method the predetermined statistics comprise one or the combination of linear interpolation, average, and standard deviation of the differential data.

In an embodiment of the method the testing step further comprises calculating the total number of the differential data points during the monitoring time period and/or the reference time period.

In an embodiment the method comprises the step of filtering SCADA data to eliminate low-power data, wherein the low-power data is determined based on a preselected power threshold.

In an embodiment of the method the step of processing SCADA data further comprises averaging of the SCADA data over a predefined period of time. Preferably, the averaging is performed over the period ranging from one hour to one year.

In an embodiment of the method the average temperature of the wind turbine component is calculated over all the wind turbines in the entire wind farm that are of the same model.

In an embodiment of the method the wind turbine component is one of main bearing, generator, hydraulic oil system, inverter, transformer and gearbox.

In an embodiment of the method the preselected time period over which the SCADA data is collected is longer than one year.

In an embodiment of the method the monitoring feature is one-day average or one-month average of the differential data.

In an embodiment of the method the monitoring feature is one-week average or one-month average of the differential data, and/or the reference feature is one-week or one-month average of the differential data.

In an embodiment of the method the monitoring feature and/or the reference feature is the slope of the linear interpolation of the differential data.

In an embodiment of the method the slope is calculated over at least one of the time periods with a duration of half a month, one month, three months, six months and nine months.

In another aspect of the invention, there is provided a computer-readable storage medium comprising instructions, which when executed by a computer cause the computer to carry out the steps of the method of any of embodiments described above.

Brief Description of the Drawings

The invention will be better understood with the aid of the description of embodiments given by way of example only and illustrated by the figures, in which:

Fig. 1 shows a flow diagram of the method for condition monitoring in accordance with one embodiment of the invention;

Fig. 2 shows a flow diagram of the selection step in accordance with one embodiment of the invention;

Fig. 3 shows a flow diagram of the processing step in accordance with one embodiment of the invention;

Fig. 4 shows a flow diagram of the filtering of data in the processing step in accordance with one embodiment of the invention;

Fig. 5 shows a flow diagram of the example of feature extraction in accordance with one embodiment of the invention;

Fig. 6A and Fig. 6B show a schematic illustration of various time periods.

Detailed Description

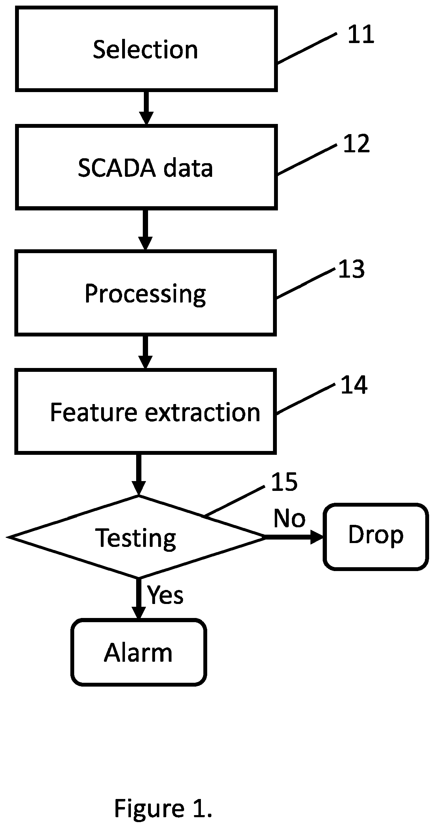

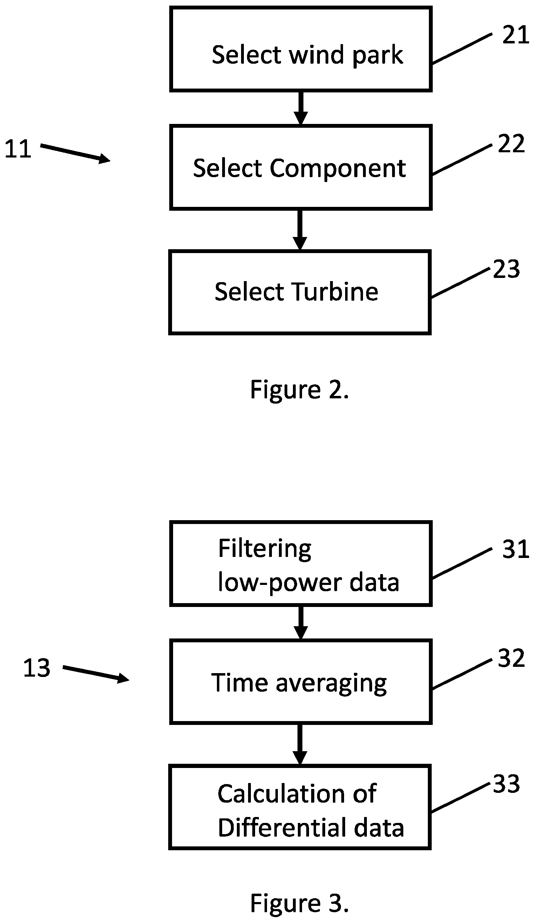

Figure 1 shows a flow diagram of the method for condition monitoring in accordance with one embodiment of the invention. The first step in the method may be a selection step 11 as shown in more detail in Figure 2. In the first step 21 of the selection process, a specific wind farm is selected. In the next step 22, at least one component of the wind turbines in the wind farm is selected. In the preferred embodiment, this component may be, but not limited to: main bearing, generator, hydraulic oil system and gearbox of the wind turbine. In the final step 23 of the selection process 11, at least one wind turbine to be monitored is selected. The method allows also to monitor multiple turbines and components of the wind turbines in parallel.

As shown in Figure 1, step 12 of the method comprises acquiring supervisory control and data acquisition (SCADA) data of the wind farm, or of the one part of the wind farm comprising a minimum of two wind turbines. In one preferred embodiment, the SCADA data across whole farm is collected. The SCADA data contains operation data of the wind turbine or wind farm. In general, the SCADA system is a control system of a plant or turbine used for high-level process supervisory management. The SCADA system performs a supervisory operation over a variety of the devices and components of the controlled system. In general, SCADA data contains vast information collected by the sensors inside the wind turbine. In the preferred embodiment, the SCADA data comprises temperature values of the at least one component of the wind turbine during a preselected time period. In one embodiment, the SCADA data comprises the temperature values of all the critical components of the wind turbine. The SCADA data is collected in time periods which may range from few minutes to few years. The time intervals between the measurement points in SCADA data varies depending on the required accuracy, for example, the intervals could range from a few seconds or multiple minutes. For every measurement point and the specific component of the wind turbine, SCADA data may record the series of information as a tuple (T, t, P, Temp), where T is name of the turbine, t is the time of the measurement, P is power of the turbine at time t, and Temp is the temperature of the selected component at time t. SCADA data is normally available to the users, so advantageously the method may not need any additional measurements or installation of new devices.

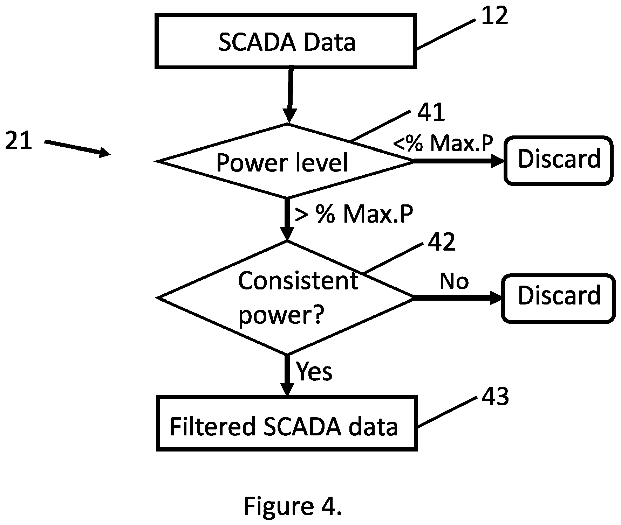

After acquiring the SCADA data, the data is processed in step 13 of the method. In one preferred embodiment shown in Figure 3, the SCADA data may go through the three steps of: filtering low-power data 31, time averaging of the data 32, and calculation of differential data 33. The first two steps, 31 and 32, may serve to improve the quality and to make processing faster. In one embodiment, step 13 is consisting only of step 33. The step of filtering out low power data is shown in more detail in flow chart in Figure 4. For each data point in the SCADA data power level is tested in step 41. In the case that the power level is lower than the certain percentage of maximum power the data point is discarded. The certain percentage of the maximum power may be for example in the range of 0 to 90%. The data points with the power value higher than the certain percentage of maximum power are further tested in step 42. Step 42 checks if the turbine has been consistently producing power (producing more than a certain threshold) during a certain, so-called, consistency time period prior to the time of the measurement of the that particular data point. If this is not the case the data point is discarded. Otherwise the data is saved as filtered SCADA data in step 43.

In one embodiment, step 32, time-averaging, which may have the following steps, is performed: defining duration and resolution of time intervals; calculation and storage of the time intervals; for each time interval the average of all data points in the interval is calculated and saved. In one embodiment, the SCADA data points originally recorded every 10 minutes are averaged to daily resolution. In general, the resolution parameters that may be used are time unit (hour or day), the number of time units (positive integer) and moving average (positive integer). The process of averaging may be repeated for every turbine of the wind farm that is monitored.

Step 33, which is the calculation of the differential data, may comprise the calculation of the difference between temperature of the selected wind turbine component of the selected wind turbine and an average temperature of the selected wind turbine component in at least two wind turbines in the wind farm. In one preferred embodiment, the average temperature of the wind turbine component is calculated over all the wind turbines in the wind farm that are of the same model. In one embodiment, for each pre-processed or raw SCADA data point $d_i = (t_i, T_i)$ the differential data point $\delta_i = T_i - \overline{T}_l$ is calculated, where $t_i$ - denotes the time corresponding to the $i$:th data point; $T_i$ - denotes the component temperature corresponding to the $i$:th data point; $\overline{T}_l$ - denotes the average farm component temperature of the turbines which have the same model as the one that is described by the data point. The process of calculating the differential data may be repeated for every turbine in the wind farm that is analyzed.

Step 14, shown in Figure 1, shows the feature extraction step. In one embodiment, the extraction of the features comprises calculating at least one predetermined statistic of the differential data during a monitoring time period and saving the predetermined statistics as a monitoring feature. The monitoring time period may be selected in the selection step 11, or it may be selected at a later stage, but before the step of the feature extraction. In one embodiment the monitoring time period is one day or one month. In one embodiment the step of the feature extraction further comprises calculating at least one predetermined statistic of the differential data during a reference time period, wherein the reference time period is at least partially overlapping the monitoring time period and saving the predetermined statistic as a reference feature. The predetermined statistic may comprise one or the combination of: linear interpolation, average and standard deviation of the differential data.

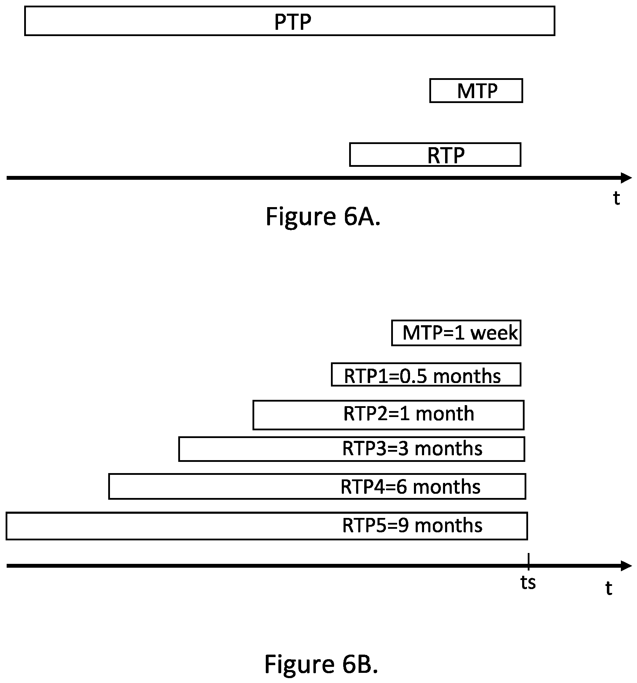

Various time periods as a function of time are visualized in Figure 6A. The predetermined time period (PTP) is usually a long period lasting months or years. The monitoring time period (MTP) is usually short period lasting, for example, days or months. Finally, the reference time period (RTP) is at least partially overlapping the monitoring time period, and it can be, for example, days or months. The examples of the durations are provided for illustration purposes, and they are not limiting.

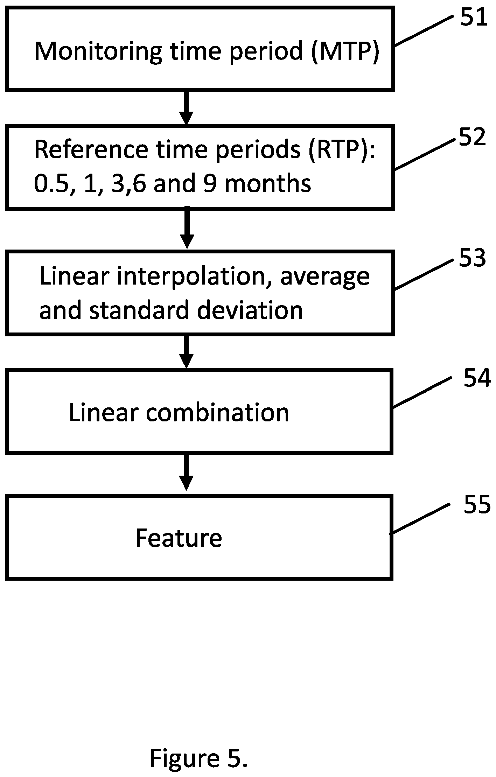

The example of the embodiment of the feature extraction is shown in the flow diagram in Figure 5. In step 51, the monitoring time period MTP is selected, which may be for example one week as shown in Figure 6A. From pre-processed SCADA data, five reference time periods (RTP1, RTP2, RTP3, RTP4, and RTP5) are selected in step 52. The selected reference time periods have durations of 0.5, 1, 3, 6 and 9 months as shown in Figure 6B. The monitoring time period and the reference time periods end at the same time ts as shown in Figure 6B. Linear interpolation, average and standard deviation are calculated and saved for each reference time period in step 53. In step 54, the linear combinations of the statistics is calculated and saved as the reference features in final step 55. Using the monitoring time period similar monitoring features may be calculated.

In one non-limiting example, the features may be categorized in the three categories:

- Short term increase features: for example, one-day average and one-month average;
- Slope features: for example, slopes of the interpolated lines of the periods with a duration of 0.5, 1, 3, 6 and 9 months;
- Consistent long-term increase features: for example, one-month average, three-month average, six-month average and nine-month average.

In another embodiment, the feature may be the linear combination of at least two of the short term increase feature, the slope feature and the consistent long-term increase feature.

After the feature extraction is performed, there is the testing step 15 as shown in Figure 1. This step is testing if the at least one monitoring feature exceeds a corresponding threshold value. In the preferred embodiment, the threshold value is a function of the at least one reference feature.

In one preferred embodiment all the thresholds are based on the standard deviation of the pre-processed time series containing the temperature of the component which has been monitored. For example, an alarm is triggered if the following condition is satisfied:

$$mean\_day > mean\_month + x*std\_month$$

where mean_day is a monitoring feature corresponding to statistic of average value of the component temperature during the monitoring time of one day; mean_month is reference feature corresponding to the statistic of mean value temperature during the period of one month before the monitoring time; std_month is reference feature corresponding to the statistic of standard deviation of the temperature during the one month before the monitoring time; and x is an adjustable parameter, which is dependent on the component.

In one embodiment, the test may be performed as follows:

- If any of the short term increase features exceeds its threshold, then send an alert;
- If any of the slope features exceeds its threshold, then send an alert;
- If all of the consistent long term increase features exceed their thresholds, then send an alert.

Further examples are provided in the following paragraphs using definitions:

*mean(T, ts, n)* denotes the mean of the pre-processed time series, before the alerting stage, starting at the timestamp corresponding to *n* days before *ts* (exclusive) and ending at *ts* (inclusive). For example, *mean(T, 2019-01-10, 7)* is the mean of the time series over the days *2019-01-04, 2019-01-05, ..., 2019-01-10* which is 7 days in total;

*slope(T, ts, n)* denotes the slope of the linear interpolation of the pre-processed time series, before the alerting stage, starting at the timestamp corresponding to *n* days before *ts* (exclusive) and ending at *ts* (inclusive); For instance *slope(T, 2019-01-10, 7)* is the slope of the linear interpolation of the time series over the days *2019-01-04, 2019-01-05, ..., 2019-01-10* which is 7 days in total. If the time series would have the same values for all of these days then the slope would be equal to 0;

*std(T, ts, n)* denotes the standard deviation of the pre-processed time series for all turbines of the same model as *T* in the wind farm, before the alerting stage, starting at the timestamp corresponding to *x* days before *ts* (exclusive) and ending at *ts* (inclusive);

*count(T, ts, n)* denotes the total number of data points that is in of the pre-processed time series, before the alerting stage, starting at the timestamp corresponding to *x* days before *ts* (exclusive) and ending at *ts* (inclusive). There might for various reasons be no data point in the time series for a date, this because all points might have been filtered out in the power filtering stage so that there are no data points left for the entire day.

Below is a list of condition of alerts. If any of these conditions are satisfied then the alarm is sent.

Short term condition 1:

$$mean(T,ts,7) > mean(T,ts,30) + x\_week*std(T,ts,10) \text{ and } count(T,ts,7) > 1,$$
$$\text{where } x\_week = 0.9.$$

Short term condition 2:

$$mean(T,ts,1) > mean(T,ts,30) + x\_day*std(T,ts,10), \text{ where } x\_day = 1.9.$$

Slope condition 2 weeks:

$$\text{slope}(T,ts,14) > x\_2week*std(T,ts,10) \text{ and } count(T,ts,14) > 3, \text{ where } x\_2week = 0.07.$$

Slope condition 1 month:

$$\text{slope}(T,ts,30) > x\_month*std(T,ts,10) \text{ and } count(T,ts,30) > 8, \text{ where } x\_2month = 0.05.$$

Slope condition 3 months:

$$\text{slope}(T,ts,90) > x\_3month*std(T,ts,10) \text{ and } count(T,ts,90) > count(T,ts,30)+10 \text{ and } slope(T,ts,30) > 0, \text{ where } x\_3month = 0.026.$$

Slope condition 6 months:

$$\text{slope}(T,ts,180) > x\_6month*std(T,ts,10) \text{ and } count(T,ts,180) > count(T,ts,90)+20 \text{ and } slope(T,ts,30) > 0 \text{ and } slope(T,ts,90) > 0, \text{ where } x\_6month = 0.013.$$

Slope condition 9 months:

$$\text{slope}(T,ts,270) > x\_9month*std(T,ts,10) \text{ and } count(T,ts,270) > count(T,ts,180) \text{ and } slope(T,ts,30) > 0 \text{ and } slope(T,ts,90) > 0 \text{ and } slope(T,ts,180) > 0, \text{ where } x\_9month = 0.004.$$

Long term condition:

$$\text{mean}(T,ts,1) > mean(T,ts,30) \text{ and } mean(T,ts,30) - mean(T,ts,90) > y\_month*std(T,ts,10) \text{ and } mean(T,ts,90) - mean(T,ts,180) > y\_3month*std(T,ts,10), \text{ where } y\_month = 0.21 \text{ and } y\_3month = 0.15.$$

The method according to the invention offers several advantages compared to the traditional methods for the power generation assets.

Using the method according to the invention it is possible to identify the failure patterns and to release alarms at an early stage, which allows for the more efficient risk management of the critical components' failures and increase of the energy output by minimizing costly downtimes.

## Claims

1. A method for predictive monitoring of the condition of wind turbines, the method comprising the steps of:

   - (11) selecting at least one wind turbine inside a wind farm and at least one component of the wind turbine;
   - (12) acquiring SCADA data comprising operational data of the wind farm during a preselected time period, wherein the SCADA data comprises temperature values of the at least one component of the wind turbine during the preselected time period;
   - (13) processing SCADA data comprising calculating differential data, wherein the differential data is a difference between the temperature values of the selected wind turbine component of the selected wind turbine and an average temperature of the selected wind turbine component in at least two wind turbines in the wind farm;
- defining a monitoring time period to monitor the component, wherein the monitoring time interval is shorter than the preselected time period;
- (14) extracting features, wherein the extraction of the features comprises calculating at least one predetermined statistic of the differential data during the monitoring time period, and saving the predetermined statistic as a monitoring feature;
- (15) testing if at least one monitoring feature exceeds a threshold value, **characterized in that** the step of the extracting the features further comprises calculating at least one predetermined statistic of the differential data during a reference time period, wherein the reference time period is at least partially overlapping the monitoring time period, and saving the predetermined statistic as a reference feature, wherein the threshold value is a function of the at least one reference feature.

2. The method of claim 1 further comprising the step of sending an alarm in the case that at least one monitoring feature exceeds its corresponding threshold value.

3. The method of any one of the preceding claims, wherein the predetermined statistics comprise one or the combination of: linear interpolation, average, and standard deviation of the differential data.

4. The method of any one of the preceding claims, wherein the testing step further comprises calculating the total number of the differential data points during the monitoring time period and/or the reference time period.

5. The method of any one of the preceding claims further comprising the step of filtering SCADA data to eliminate low-power data, wherein the low-power data is determined based on a preselected power threshold.

6. The method of any one of the preceding claims, wherein the step of processing SCADA data further comprising averaging of the SCADA data over a predefined time period.

7. The method of claim 6, wherein the averaging is performed over the period ranging from one hour to one year.

8. The method of any one of the preceding claims, wherein the average temperature of the wind turbine component is calculated over all the wind turbines in the wind farm that are of the same model.

9. The method of any of the preceding claims wherein the wind turbine component is one of main bearing, generator, hydraulic oil system, inverter, transformer and gearbox.

10. The method of any one of the preceding claims, wherein the preselected time period is longer than one year.

11. The method of any one of the preceding claims, wherein the monitoring feature is one-day average or one-month average of the differential data.

12. The method of any one of the claims 1 to 10, wherein the monitoring feature is one-week average or one-month average of the differential data, and/or wherein the reference feature is one-week or one-month average of the differential data.

13. The method of any one of claims 1 to 10, wherein the monitoring feature and/or the reference feature is the slope of the linear interpolation of the differential data.

14. The method of claim 13, wherein the slope is calculated over at least one of the time periods with a duration of half-month, one month, three months, six months and nine months.

15. A computer-readable storage medium comprising instructions, which when executed by a computer, cause the computer to carry out the steps of the method of any of claims 1 to 14.

**Patentansprüche**

1. Verfahren zur prädiktiven Überwachung des Zustands von Windkraftanlagen, wobei das Verfahren die folgenden Schritte umfasst:

- (11)
Auswählen mindestens einer Windkraftanlage in einem Windpark und mindestens einer Komponente der Windkraftanlage;
- (12)

Erfassen von SCADA-Daten, die Betriebsdaten des Windparks während eines vorgewählten Zeitraums umfassen,
wobei die SCADA-Daten Temperaturwerte der mindestens einen Komponente der Windkraftanlage während des vorgewählten Zeitraums umfassen;

- (13)

Verarbeiten von SCADA-Daten durch Berechnen von Differenzdaten,
wobei die Differenzdaten eine Differenz zwischen den Temperaturwerten der ausgewählten Windkraftanlagenkomponente der ausgewählten Windkraftanlage und einer durchschnittlichen Temperatur der ausgewählten Windkraftanlagenkomponente in mindestens zwei Windkraftanlagen im Windpark sind;

- Definieren eines Überwachungszeitraums zum Überwachen der Komponente,
wobei das Überwachungszeitintervall kürzer ist als der vorgewählte Zeitraum;
- (14)

Extrahieren von Merkmalen,
wobei die Extraktion der Merkmale das Berechnen mindestens einer vorbestimmten Statistik der Differenzdaten während des Überwachungszeitraums und das Speichern der vorbestimmten Statistik als Überwachungsmerkmal umfasst;

- (15)

Prüfen, ob mindestens ein Überwachungsmerkmal einen Schwellenwert überschreitet,
**dadurch gekennzeichnet, dass** der Schritt des Extrahierens der Merkmale ferner das Berechnen mindestens einer vorbestimmten Statistik der Differenzdaten während eines Referenzzeitraums umfasst, wobei sich der Referenzzeitraum zumindest teilweise mit dem Überwachungszeitraum überschneidet, und Speichern der vorbestimmten Statistik als Referenzmerkmal,
wobei der Schwellenwert eine Funktion des mindestens einen Referenzmerkmals ist.

2. Verfahren nach Anspruch 1, das ferner den Schritt des Sendens eines Alarms für den Fall umfasst, dass mindestens ein Überwachungsmerkmal seinen entsprechenden Schwellenwert überschreitet.

3. Verfahren nach einem der vorhergehenden Ansprüche, wobei die vorbestimmten Statistiken ein Element oder die Kombination der folgenden Elemente umfassen:
lineare Interpolation, Durchschnitt und Standardabweichung der Differenzdaten.

4. Verfahren nach einem der vorhergehenden Ansprüche, wobei der Prüfschritt ferner das Berechnen der Gesamtzahl der Differenzdatenpunkte während des Überwachungszeitraums und/oder des Referenzzeitraums umfasst.

5. Verfahren nach einem der vorhergehenden Ansprüche, das ferner den Schritt des Filterns von SCADA-Daten umfasst, um Low-Power-Daten zu eliminieren,
wobei die Low-Power-Daten auf der Grundlage eines vorgewählten Leistungsschwellenwerts bestimmt werden.

6. Verfahren nach einem der vorhergehenden Ansprüche, wobei der Schritt des Verarbeitens von SCADA-Daten ferner die Mittelwertbildung der SCADA-Daten über einen vordefinierten Zeitraum umfasst.

7. Verfahren nach Anspruch 6,
wobei die Mittelwertbildung über einen Zeitraum von einer Stunde bis zu einem Jahr durchgeführt wird.

8. Verfahren nach einem der vorhergehenden Ansprüche, wobei die durchschnittliche Temperatur der Windkraftanlagenkomponente über alle Windkraftanlagen im Windpark, die demselben Modell angehören, berechnet wird.

9. Verfahren nach einem der vorhergehenden Ansprüche, wobei die Windkraftanlagenkomponente eines der folgenden Elemente ist: Hauptlager, Generator, Hydraulikölsystem, Wechselrichter, Transformator und Getriebe.

10. Verfahren nach einem der vorhergehenden Ansprüche, wobei der vorgewählte Zeitraum länger als ein Jahr ist.

11. Verfahren nach einem der vorhergehenden Ansprüche, wobei das Überwachungsmerkmal ein Tagesdurchschnitt oder ein Monatsdurchschnitt der Differenzdaten ist.

12. Verfahren nach einem der Ansprüche 1 bis 10,

    wobei das Überwachungsmerkmal ein Wochendurchschnitt oder ein Monatsdurchschnitt der Differenzdaten ist, und/oder

    wobei das Referenzmerkmal ein Wochen- oder Monatsdurchschnitt der Differenzdaten ist.

13. Verfahren nach einem der Ansprüche 1 bis 10,
    wobei das Überwachungsmerkmal und/oder das Referenzmerkmal die Steigung der linearen Interpolation der Differenzdaten ist.

14. Verfahren nach Anspruch 13,
    wobei die Steigung über mindestens einen der Zeiträume mit einer Dauer von einem halben Monat, einem Monat, drei Monaten, sechs Monaten und neun Monaten berechnet wird.

15. Computerlesbares Speichermedium, das Anweisungen enthält, die, wenn sie von einem Computer ausgeführt werden, den Computer veranlassen, die Schritte des Verfahrens nach einem der Ansprüche 1 bis 14 auszuführen.

**Revendications**

1. Procédé de surveillance prédictive de l'état d'éoliennes, le procédé comprenant les étapes de :

    - (11)
    sélection d'au moins une éolienne à l'intérieur d'un parc d'éoliennes et d'au moins un composant de l'éolienne ;
    - (12)
    acquisition de données SCADA comprenant des données opérationnelles du parc d'éoliennes pendant une période temporelle présélectionnée, dans lequel les données SCADA comprennent des valeurs de température de l'au moins un composant de l'éolienne pendant la période temporelle présélectionnée ;
    - (13)
    traitement des données SCADA comprenant le calcul de données différentielles, dans lequel les données différentielles sont une différence entre les valeurs de température du composant d'éolienne sélectionné de l'éolienne sélectionnée et une température moyenne du composant d'éolienne sélectionné dans au moins deux éoliennes dans le parc d'éoliennes ;
    - définition d'une période temporelle de surveillance pour surveiller le composant, dans lequel l'intervalle temporel de surveillance est plus court que la période temporelle présélectionnée ;
    - (14)
    extraction de caractéristiques, dans lequel l'extraction des caractéristiques comprend le calcul d'au moins une statistique prédéterminée des données différentielles pendant la période temporelle de surveillance, et la sauvegarde de la statistique prédéterminée en tant que caractéristique de surveillance ;
    - (15)

    test de si au moins une caractéristique de surveillance excède une valeur de seuil,
    **caractérisé en ce que** l'étape d'extraction des caractéristiques comprend en outre le calcul d'au moins une statistique prédéterminée des données différentielles pendant une période temporelle de référence, dans lequel la période temporelle de référence est au moins partiellement en chevauchement avec la période temporelle de surveillance, et la sauvegarde de la statistique prédéterminée en tant que caractéristique de référence,
    dans lequel la valeur de seuil est une fonction de l'au moins une caractéristique de référence.

**2.** Procédé selon la revendication 1, comprenant en outre l'étape d'envoi d'une alarme dans le cas où au moins une caractéristique de surveillance excède sa valeur de seuil correspondante.

**3.** Procédé selon l'une quelconque des revendications précédentes, dans lequel les statistiques prédéterminées comprennent une statistique parmi les statistiques suivantes ou la combinaison de celles-ci : une interpolation linéaire, une moyenne et un écart type des données différentielles.

**4.** Procédé selon l'une quelconque des revendications précédentes, dans lequel l'étape de test comprend en outre le calcul du nombre total des points de données différentielles pendant la période temporelle de surveillance et/ou la période temporelle de référence.

**5.** Procédé selon l'une quelconque des revendications précédentes, comprenant en outre l'étape de filtrage de données SCADA pour éliminer les données de faible puissance, dans lequel les données de faible puissance sont déterminées sur la base d'un seuil de puissance présélectionné.

**6.** Procédé selon l'une quelconque des revendications précédentes, dans lequel l'étape de traitement de données SCADA comprend en outre le calcul de la moyenne des données SCADA sur une période temporelle prédéfinie.

**7.** Procédé selon la revendication 6, dans lequel le calcul de moyenne est réalisé sur la période allant d'une heure à une année.

**8.** Procédé selon l'une quelconque des revendications précédentes, dans lequel la température moyenne du composant d'éolienne est calculée sur toutes les éoliennes dans le parc d'éoliennes qui sont du même modèle.

**9.** Procédé selon l'une quelconque des revendications précédentes, dans lequel le composant d'éolienne est un composant parmi un palier principal, un générateur, un système d'huile hydraulique, un inverseur, un transformateur et une boîte de vitesses.

**10.** Procédé selon l'une quelconque des revendications précédentes, dans lequel la période temporelle présélectionnée est plus longue qu'une année.

**11.** Procédé selon l'une quelconque des revendications précédentes, dans lequel la caractéristique de surveillance est une moyenne sur un jour ou une moyenne sur un mois des données différentielles.

**12.** Procédé selon l'une quelconque des revendications 1 à 10, dans lequel la caractéristique de surveillance est une moyenne sur une semaine ou une moyenne sur un mois des données différentielles, et/ou dans lequel la caractéristique de référence est une moyenne sur une semaine ou sur un mois des données différentielles.

**13.** Procédé selon l'une quelconque des revendications 1 à 10, dans lequel la caractéristique de surveillance et/ou la caractéristique de référence sont/est la pente de l'interpolation linéaire des données différentielles.

**14.** Procédé selon la revendication 13, dans lequel la pente est calculée sur au moins l'une des périodes temporelles présentant une durée d'un demi-mois, d'un mois, de trois mois, de six mois et de neuf mois.

**15.** Support de stockage lisible par ordinateur comprenant des instructions qui, lorsqu'elles sont exécutées par un ordinateur, forcent l'ordinateur à mettre en œuvre les étapes du procédé selon l'une quelconque des revendications 1 à 14.

Figure 1.

```
┌─────────────────────────┐
│                         │──── 21
│    Select wind park     │
│                         │
└─────────────────────────┘
            │
            ▼
┌─────────────────────────┐
│                         │──── 22
11 ──→   │   Select Component      │
│                         │
└─────────────────────────┘
            │
            ▼
┌─────────────────────────┐
│                         │──── 23
│    Select Turbine       │
│                         │
└─────────────────────────┘
```

Figure 2.

```
┌─────────────────────────┐
│       Filtering         │──── 31
│     low-power data      │
└─────────────────────────┘
            │
            ▼
┌─────────────────────────┐
13 ──→   │     Time averaging      │──── 32
└─────────────────────────┘
            │
            ▼
┌─────────────────────────┐
│    Calculation of       │──── 33
│   Differential data     │
└─────────────────────────┘
```

Figure 3.

Figure 4.

Figure 5.

PTP

MTP

RTP

t

Figure 6A.

MTP=1 week

RTP1=0.5 months

RTP2=1 month

RTP3=3 months

RTP4=6 months

RTP5=9 months

ts

t

Figure 6B.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109779846 A